(19) Europäisches Patentamt
European Patent Office
Office européen des brevets

(11) EP 4 553 983 A1

(12) EUROPEAN PATENT APPLICATION

(43) Date of publication:
**14.05.2025 Bulletin 2025/20**

(21) Application number: **24212630.8**

(22) Date of filing: **13.11.2024**

(51) International Patent Classification (IPC):
***H01M 50/446*** *(2021.01)* ***H01M 50/403*** *(2021.01)*
***H01M 50/42*** *(2021.01)* ***H01M 50/489*** *(2021.01)*
***H01M 50/449*** *(2021.01)* ***H01M 10/052*** *(2010.01)*
***H01M 50/417*** *(2021.01)*

(52) Cooperative Patent Classification (CPC):
**H01M 50/446; H01M 10/052; H01M 50/403; H01M 50/417; H01M 50/42; H01M 50/449; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 KR 20230156517**

(71) Applicant: **SAMSUNG SDI CO., LTD.**
**Yongin-si, Gyeonggi-do 17084 (KR)**

(72) Inventors:
- **Kim, Soo Hee**
  **16678 Suwon-si, Gyeonggi-do (KR)**
- **Lee, Jung Yoon**
  **16678 Suwon-si, Gyeonggi-do (KR)**
- **Seo, Jin Weon**
  **16678 Suwon-si, Gyeonggi-do (KR)**
- **Lee, Eon Mi**
  **16678 Suwon-si, Gyeonggi-do (KR)**
- **Park, Sam Jin**
  **16678 Suwon-si, Gyeonggi-do (KR)**
- **Lee, Min Jeong**
  **16678 Suwon-si, Gyeonggi-do (KR)**
- **Han, Yoo Bin**
  **16678 Suwon-si, Gyeonggi-do (KR)**
- **Ko, Chang Hong**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) Examples of the present disclosure relate to a separator for a rechargeable lithium battery, and a rechargeable lithium battery including the separator. The separator for a rechargeable lithium battery includes a porous substrate, and a coating layer located on at least one surface of the porous substrate. The coating layer includes a cross-linked product of a composition containing a binder and a cross-linking agent and a filler, the binder includes a (meth)acryl-based binder containing a first structural unit derived from (meth)acrylamide, and a second structural unit including at least one of a structural unit derived from (meth)acrylic acid, (meth)acrylate, and a structural unit derived from (meth)acrylamido sulfonic acid. The cross-linking agent includes an aziridine-based cross-linking agent in an amount ranging from 5 wt% to 50 wt% with respect to the (meth)acryl-based binder, and the filler has a particle diameter D100 of 0.7 μm or less.

EP 4 553 983 A1

## Description

BACKGROUND

### 1. Field of the Disclosure

The present disclosure relates to a separator for a rechargeable lithium battery, and a rechargeable lithium battery including the separator.

### 2. Discussion of Related Art

With increasing use of electronic devices, such as, e.g., mobile phones, notebook computers, electric vehicles, and the like, using batteries, the demand for secondary batteries having high energy density and high capacity is increasing. Therefore, improving the performance of rechargeable lithium batteries may be advantageous.

A rechargeable lithium battery is a battery including a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

The rechargeable lithium battery may include a separator between the positive electrode and the negative electrode. The separator is impregnated in an electrolyte solution. It may be desirable to ensure the safety of the battery when the separator does not undergo thermal contraction in the electrolyte solution and maintains the original form thereof.

SUMMARY OF THE DISCLOSURE

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, the separator having a low dry shrinkage ratio and a low shrinkage ratio in an electrolyte, thereby increasing the safety of the battery.

Another example embodiment includes a rechargeable lithium battery including the separator for a rechargeable lithium battery.

According to an aspect of the present disclosure, a separator for a rechargeable lithium battery includes a porous substrate, and a coating layer located on at least one surface of the porous substrate. The coating layer includes a cross-linked product of a binder and a cross-linking agent and a filler, the binder includes a (meth)acryl-based binder containing a first structural unit derived from (meth)acrylamide, and a second structural unit including at least one of a structural unit derived from (meth)acrylic acid, (meth)acrylate, or a salt thereof, and a structural unit derived from (meth)acrylamido sulfonic acid or a salt thereof, the cross-linking agent includes an aziridine-based crosslinking agent, the aziridine-based cross-linking agent is contained in an amount ranging from 5 wt% to 50 wt% with respect to the (meth)acryl-based binder, and the filler has a particle diameter D100 of 0.7 μm or less.

According to another aspect of the present disclosure, a rechargeable lithium battery includes the separator for a rechargeable lithium battery, a positive electrode, and a negative electrode.

BRIEF DESCRIPTION OF THE DRAWINGS

FIG. 1 is a cross-sectional view showing a separator for a rechargeable lithium battery according to one example embodiment.

FIGS. 2 to 5 are cross-sectional views schematically illustrating a rechargeable lithium battery according to one example embodiment.

DETAILED DESCRIPTION

Hereinafter, example embodiments of the present disclosure are described in detail. However, the embodiments are presented as examples, the present disclosure is not limited thereto, and the present disclosure is only defined by the scope of the appended claims.

Unless otherwise stated herein, when a part such as a layer, a membrane, an area, a plate, etc. is described as being disposed "on" another part, it includes not only a case where the part is "directly on" another part, but also a case where there are other parts therebetween.

Unless otherwise stated herein, the singular may also include the plural.

In the present specification, "a combination thereof' may indicate a mixture, stack, composite, copolymer, alloy, blend, or reaction product of constituents.

Unless otherwise defined herein, 'a particle diameter D100' refers to a diameter of a particle with a cumulative volume of 100% by volume in a particle diameter distribution. The particle diameter distribution may be measured by methods known to those skilled in the art. For example, the particle diameter distribution may be measured using a particle size analyzer, a transmission electron microscope photograph, or a scanning electron microscope photograph. As another method, the particle diameter distribution may be obtained by measuring the particle diameter using a measuring device using dynamic light scattering, performing data analysis to count the number of particles for each particle size range, and then calculating the particle diameter D100 therefrom. Alternatively, the particle diameter distribution may be measured using a laser diffraction method. When measuring the particle diameter distribution by the laser diffraction method, for example, the particle diameter D100 based on 100% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W.

Unless otherwise defined herein, 'a particle diameter D50' may refer to a diameter of a particle with a cumulative volume of 50% by volume in a particle diameter distribution. The particle diameter distribution may be obtained from the method descripted in the particle diameter D100.

In the present specification, "(meth)acryl" refers to acryl and/or methacryl.

Hereinafter, unless otherwise defined, "substitution" means that hydrogen in a compound is selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be at least one of a methyl group, an ethyl group, or a propyl group. The C1 to C10 alkylene group may be or include, for example, a C1 to C6 alkylene group, a C1 to C5 alkylene group, or a C1 to C3 alkylene group and may be or include, for example, a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" means "X or more and Y or less ($X\leq$ and $\leq Y$)."

A separator for a rechargeable lithium battery according to one example embodiment includes a porous substrate, and a coating layer located on at least one surface of the porous substrate, wherein the coating layer includes a cross-linked product of a binder and a cross-linking agent and a filler, the binder includes a (meth)acryl-based binder containing a first structural unit derived from (meth)acrylamide, and a second structural unit including at least one of a structural unit derived from (meth)acrylic acid, (meth)acrylate, or a salt thereof, and a structural unit derived from (meth) acrylamido sulfonic acid or a salt thereof, the cross-linking agent includes an aziridine-based crosslinking agent, the aziridine-based cross-linking agent is contained in an amount ranging from 5 wt% to 50 wt% with respect to the (meth) acryl-based binder, and the filler has a particle diameter D100 of 0.7 $\mu$m or less measured by a laser diffraction method.

The coating layer includes the cross-linked product of the (meth)acryl-based binder and a given content of the aziridine-based cross-linking agent, and the filler. Therefore, the separator for a rechargeable lithium battery can have a significantly low dry shrinkage ratio and shrinkage ratio in an electrolyte. According to one example embodiment, the dry

shrinkage ratio of the separator for a rechargeable lithium battery may be 5% or less, and the shrinkage ratio in the electrolyte may be 15% or less, for example, 10% or less, or for example, 5% or less.

According to one example embodiment, the separator for a rechargeable lithium battery exhibits a significantly low shrinkage ratio in the electrolyte. The shrinkage ratio in the electrolyte is obtained in consideration of an application location of the separator in the rechargeable lithium battery. The separator may be saturated with the electrolyte. A separator with a low shrinkage ratio in an electrolyte can increase the stability of the battery by maintaining heat resistance properties without weakening the mechanical properties of the (meth)acryl-based binder when the separator is saturated with the electrolyte.

A separator formed of or including a composition containing the (meth)acryl-based binder but that does not include the aziridine-based cross-linking agent as a crosslinking agent, or that includes a crosslinking agent other than the aziridine-based crosslinking agent, may not satisfy the above shrinkage ratio range in the electrolyte. According to one example embodiment, the aziridine-based cross-linking agent may be included in an amount of about 95 wt% or more, for example, in the range of about 98 wt% to about 100 wt%, or for example, about 100 wt% of the total cross-linking agent in the composition.

The aziridine-based crosslinking agent is included as a cross-linking agent, and the aziridine-based cross-linking agent may be contained in an amount ranging from 5 wt% to 50 wt% with respect to the content of the (meth)acryl-based binder. Within the above range, it is possible to achieve cross-linking of the (meth)acryl-based binder and a reduction in the shrinkage ratio in the electrolyte.

A separator formed of or including a composition containing the (meth)acryl-based binder, but that does not include a filler having a particle diameter D100 of 0.7 μm or less, or that includes a filler having a particle diameter D100 of more than 0.7 μm, may not satisfy the above shrinkage ratio range in the electrolyte. The particle diameter is measured by a laser diffraction method. More specifically, the particle diameter D100 based on 100% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of about 28 kHz with an output of 60 W.

A separator formed of or including a composition containing the aziridine-based cross-linking agent and the filler, but not that does not include the (meth)acryl-based binder or containing a binder (i.e., a binder that does not include any one of the first structural unit or the second structural unit of the (meth)acryl-based binder or substituted with another structural unit) other than the (meth)acryl-based binder, may not satisfy the above dry shrinkage ratio and shrinkage ratio in the electrolyte ranges. According to one example embodiment, the (meth)acryl-based binder may be contained in an amount of about 95 wt% or more, for example, in the range of about 98 wt% to about 100 wt%, or for example, about 100 wt% of the total binder in the composition.

The coating layer includes a cross-linked product of the composition including the (meth)acryl-based binder and the aziridine-based cross-linking agent, and the filler having a particle diameter D100 of 0.7 μm or less. According to one example embodiment, the cross-linked product may be a heat cross-linked product.

The coating layer is formed from the composition including the (meth)acryl-based binder and the aziridine-based cross-linking agent, and the filler having a particle diameter D100 of 0.7 μm or less.

## Coating layer

The binder includes a (meth)acryl-based binder including a first structural unit derived from (meth)acrylamide; and a second structural unit including at least one of a structural unit derived from (meth)acrylic acid or (meth)acrylate or a salt thereof and a structural unit derived from (meth)acrylamido sulfonic acid or a salt thereof.

The (meth)acryl-based binder is a water-based heat-resistant binder, and may fix the filler on a porous substrate, provide bonding strength so that the coating layer is bonded to the porous substrate and an electrode, and contribute to increasing the heat resistance, air permeability, and oxidation resistance of the separator.

The first structural unit derived from (meth)acrylamide has an amide functional group ($-(C=O)-NH_2$) in the structural unit. The $-(C=O)-NH_2$ functional group can increase the bonding characteristics with the porous substrate and the electrode and more firmly fix inorganic fillers in the coating layer by forming a hydrogen bond with the - OH functional group of the filler, thereby reinforcing the heat resistance of the separator.

The structural unit derived from (meth)acrylic acid, (meth)acrylate, or a salt thereof contained in the second structural unit may be configured to fix the filler on the porous substrate and also provide bonding strength so that the coating layer is bonded to the porous substrate and the electrode, and contribute to increasing the heat resistance and air permeability of the separator. In addition, the structural unit derived from (meth)acrylic acid, (meth)acrylate, or a salt thereof may contain a carboxyl functional group ($-C(=O)O-$) in the structural unit, thereby contributing to improving the dispersibility of a slurry for a coating layer.

The structural unit derived from (meth)acrylamido sulfonic acid or a salt thereof contained in the second structural unit may contain a bulky functional group, thereby reducing the mobility of the binder containing the same and reinforcing

the heat resistance of the separator.

In one example embodiment, the (meth)acryl-based binder may be a binary copolymer containing a first structural unit derived from (meth)acrylamide and a second structural unit derived from (meth)acrylic acid, (meth)acrylate, or a salt thereof, a binary copolymer containing a first structural unit derived from (meth)acrylamide and a second structural unit derived from (meth)acrylamido sulfonic acid or a salt thereof, or a terpolymer containing a first structural unit derived from (meth)acrylamide and a second structural unit including a structural unit derived from (meth)acrylic acid, (meth) acrylate, or a salt thereof and a structural unit derived from (meth)acrylamido sulfonic acid or a salt thereof.

The first structural unit may be contained in an amount ranging from 55 mol% to 95 mol%, for example 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95 mol%, with respect to 100 mol% of the (meth)acryl-based binder, and the second structural unit may be contained in an amount ranging from 5 mol% to 45 mol%, for example 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45 mol%, with respect to 100 mol% of the (meth)acryl-based binder. Within the above range, the (meth)acryl-based binder can be readily prepared, and the above-described effects of the coating layer can be readily provided.

In one example embodiment, the first structural unit may be contained in an amount ranging from 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95 mol%, 75 mol% to 95 mol% for example, 80 mol% to 95 mol% or 80 mol% to 90 mol% with respect to 100 mol% of the (meth)acryl-based binder.

The structural unit derived from (meth)acrylic acid, (meth)acrylate, or a salt thereof in the second structural unit may be contained in an amount ranging from 0 to 40 mol%, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 mol%, from more than 0 mol% to 40 mol% or less, from 1 to 40 mol%, or from 1 to 10 mol% with respect to 100 mol% of the (meth)acryl-based binder, and the structural unit derived from (meth)acrylamido sulfonic acid or a salt thereof may be contained in an amount ranging from 0 to 10 mol%, for example, 0, 1, 2, 3, 4, 5, 6, 7, 8, 9, 10 mol%, from more than 0 mol% to 10 mol% or less, or from 1 to 10 mol%.

The first structural unit derived from (meth)acrylamide may be contained in an amount ranging from 80 mol% to 90 mol% with respect to 100 mol% of the (meth)acryl-based binder, the structural unit derived from (meth)acrylic acid or (meth)acrylate may be contained in an amount ranging from 0 to 40 mol%, for example, more than 0 to 40 mol% or less or 1 to 10 mol% with respect to 100 mol% of the (meth)acryl-based binder, and the structural unit derived from (meth) acrylamido sulfonic acid or a salt thereof may be contained in an amount ranging from 0 to 10 mol%, for example, from more than 0 mol% to 10 mol% or less or from 1 to 10 mol% with respect to 100 mol% of the (meth)acryl-based binder.

When the content of each structural unit is within the above range, the heat resistance and bonding strength of the separator can be further increased.

The first structural unit derived from (meth)acrylamide may be represented by Chemical Formula 1 below:

Chemical Formula 1:

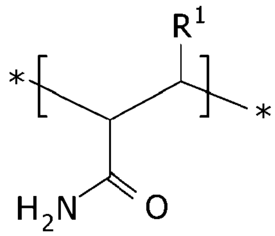

,

in Chemical Formula 1, $R^1$ is hydrogen or a methyl group.

The structural unit derived from (meth)acrylic acid, (meth)acrylate, or a salt thereof may be, for example, represented by any one of Chemical Formulas 2, 3, 4 below, and a combination thereof:

Chemical Formula 2:

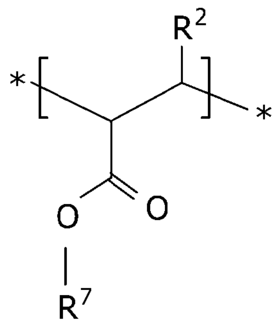

Chemical Formula 3:

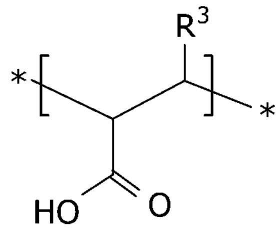

Chemical Formula 4:

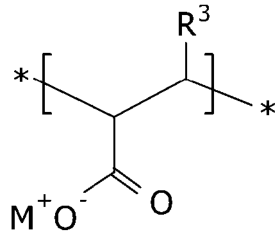

in Chemical Formulas 2, 3, and 4, $R^2$ and $R^3$ are each independently hydrogen or a methyl group, $R^7$ is a substituted or unsubstituted C1 to C20 alkyl group, and M is an alkali metal.

The alkali metal may be or include, for example, at least one of lithium, sodium, potassium, rubidium, or cesium.

The structural unit derived from (meth)acrylate may be derived from (meth)acrylic acid alkyl esters, (meth)acrylic acid perfluoroalkyl esters, and (meth)acrylate having a functional group in a side chain, and for example, may be derived from a (meth)acrylic acid alkyl ester. In addition, the carbon number of an alkyl group or perfluoroalkyl group bonded to the non-carbonyl oxygen atom of the (meth)acrylic acid alkyl ester or the (meth)acrylic acid perfluoroalkyl ester may range from 1 to 20, for example, from 1 to 10, and for example, from 1 to 5.

Examples of (meth)acrylic acid alkyl esters in which the alkyl group or perfluoroalkyl group bonded to the non-carbonyl oxygen atom has 1 to 5 carbon atoms may include acrylic acid alkyl esters such as methyl acrylate, ethyl acrylate, n-propyl acrylate, isopropyl acrylate, n-butyl acrylate, or t-butyl acrylate; acrylic acid-2-(perfluoroalkyl)ethyls such as acrylic acid-2-(perfluorobutyl)ethyl or acrylic acid-2-(perfluoropentyl) ethyl; alkyl methacrylates such as methyl methacrylate, ethyl methacrylate, n-propyl methacrylate, isopropyl methacrylate, n-butyl methacrylate, and t-butyl methacrylate; and methacrylic acid-2-(perfluoroalkyl) ethyls such as methacrylic acid-2-(perfluorobutyl) ethyl or acid-2-(perfluoropentyl) ethyl

Examples of other (meth)acrylic acid alkyl esters may include acrylic acid alkyl esters having 6 to 18 carbon atoms in the alkyl group bonded to the non-carbonyl oxygen atom such as acrylic acid n-hexyl, acrylic acid-2-ethylhexyl, acrylic acid nonyl, acrylic acid lauryl, acrylic acid stearyl, acrylic acid cyclohexyl, or acrylic acid isobornyl; methacrylic acid alkyl esters having 6 to 18 carbon atoms in the alkyl group bonded to the non-carbonyl oxygen atom such as methacrylic acid n-hexyl, methacrylic acid-2-ethylhexyl, methacrylic acid octyl, methacrylic acid isodecyl, methacrylic acid lauryl, methacrylic acid tridecyl, methacrylic acid stearyl, or methacrylic acid cyclohexyl; acrylic acid-2-(perfluoroalkyl) ethyls having 6 to 18 carbon atoms in the perfluoroalkyl group bonded to the non-carbonyl oxygen atom such as acrylic acid-2-(perfluorohexyl)ethyl, acrylic acid-2-(perfluorooctyl) ethyl, acrylic acid-2-(perfluoronitrile) ethyl, acrylic acid-2-(perfluorodecyl) ethyl, acrylic acid-2-(perfluorodecyl) ethyl, acrylic acid-2-(perfluorotetradecyl) ethyl, or acrylic acid-2-(perfluorokexadecyl) ethyl; and methacrylic acid-2-(perfluoroalkyl) ethyls having 6 to 18 carbon atoms in the perfluoroalkyl

group bonded to the non-carbonyl oxygen atom such as methacrylic acid-2-(perfluorohexyl) ethyl, methacrylic acid-2-(perfluorooctyl) ethyl, methacrylic acid-2-(perfluoronyl) ethyl, methacrylic acid-2-(perfluorodecyl) ethyl, methacrylic acid-2-(perfluorododecyl) ethyl, methacrylic acid-2-(perfluorotetradecyl) ethyl, or methacrylic acid-2-(perfluorohexadecyl) ethyl.

The structural unit derived from (meth)acrylic acid, (meth)acrylate, or a salt thereof may include one or two or more of the structural unit represented by Chemical Formula 2 and the structural units represented by Chemical Formulas 3 and 4. When two or more structural units are included together, a molar ratio of the structural unit represented by Chemical Formula 2 and the structural units represented by Chemical Formulas 3 and 4 may range from 10:1 to 1:1, as an example from 6:1 to 1:1, and as another example from 3:1 to 1:1.

The structural unit derived from (meth)acrylamido sulfonic acid or a salt thereof may be a structural unit derived from (meth)acrylamido sulfonic acid or (meth)acrylamido sulfonate, and the (meth)acrylamido sulfonate may be a conjugate base of (meth)acrylamido sulfonic acid, (meth)acrylamido sulfonate, or a derivative thereof. The structural unit derived from (meth)acrylamido sulfonic acid or (meth)acrylamido sulfonate may be, for example, represented by any one of Chemical Formulas 5, 6, 7 below, and a combination thereof:

Chemical Formula 5:

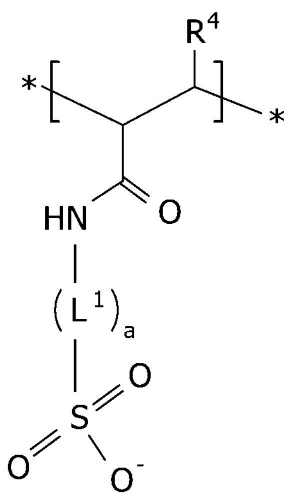

Chemical Formula 6:

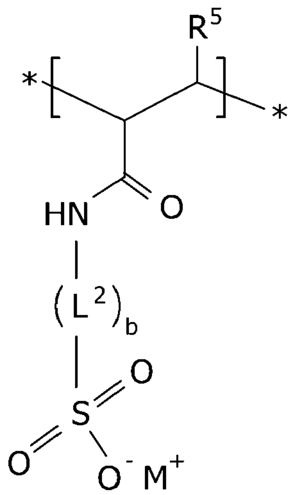

Chemical Formula 7:

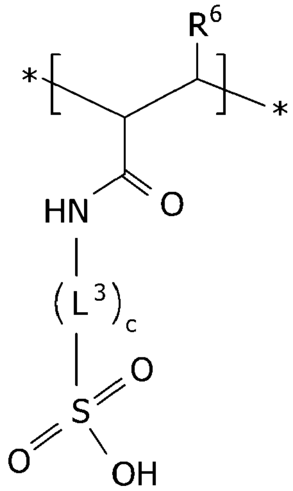

in Chemical Formulas 5 to 7, $R^4$, $R^5$, and $R^6$ are each independently hydrogen or a methyl group, $L^1$, $L^2$, and $L^3$ are each independently a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, a, b and c are each independently an integer from 0 to 2, and M is an alkali metal.

The alkali metal may be or include, for example, at least one of lithium, sodium, potassium, rubidium, or cesium.

As an example, in Chemical Formulas 5 to 7, $L^1$, $L^2$, and $L^3$ may each be independently a substituted or unsubstituted C1 to C10 alkylene groups, and a, b, and c may each be 1.

The structural unit derived from (meth)acrylamido sulfonic acid or a salt thereof may include each or two or more of the structural unit represented by Chemical Formula 5, the structural unit represented by Chemical Formula 6, and the structural unit represented by Chemical Formula 7. As an example, the above structural unit may include the structural unit represented by Chemical Formula 6, and as another example, include the structural unit represented by Chemical Formula 6 and the structural unit represented by Chemical Formula 7 together.

When the structural unit represented by Chemical Formula 6 and the structural unit represented by Chemical Formula 7 are included together, a molar ratio of the structural unit represented by Chemical Formula 6 and the structural unit represented by Chemical Formula 7 may range from 10:1 to 1:2, as an example from 5:1 to 1:1, or as another example from 3:1 to 1:1.

A sulfonate group in the structural unit derived from (meth)acrylamido sulfonic acid or a salt thereof may be or include, for example, at least one of vinyl sulfonic acid, allyl sulfonic acid, styrene sulfonic acid, anethole sulfonic acid, (meth)acrylamidoalkane sulfonic acid, sulfoalkyl (meth)acrylate, or a functional group derived from a salt thereof.

Here, the alkane may be a C1 to C20 alkane, a C1 to C10 alkane, or a C1 to C6 alkane, and the alkyl may be a C1 to C20 alkyl, a C1 to C10 alkyl, or a C1 to C6 alkyl. The salt refers to a salt composed of the above-described sulfonic acid and a desired ion. The ion may be or include, for example, at least one of an alkali metal ion, and in this case, the salt may be a sulfonic acid alkali metal salt.

The (meth)acrylamidoalkane sulfonic acid may be or include, for example, 2-(meth)acrylamido-2-methylpropane sulfonic acid, and the sulfoalkyl (meth)acrylate may be or include, for example, 2-sulfoethyl (meth)acrylate, 3-sulfopropyl (meth)acrylate, etc.

The (meth)acryl-based binder may be, for example, represented by Chemical Formula 8 below:

Chemical Formula 8:

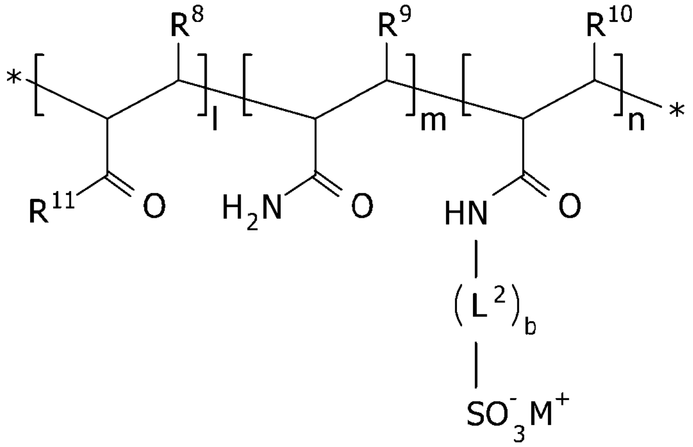

,

in Chemical Formula 8, $R^8$ to $R^{10}$ each independently are hydrogen or a methyl group,

$R^{11}$ is or includes $OR^{12}$ or $O-M^+$, $R^{12}$ is or includes hydrogen or a C1 to C6 alkyl group, M is or includes an alkali metal,
$L^2$ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
b is an integer in a range of 0 to 2,
M is or includes an alkali metal, and
l, m, and n refer to a molar ratio of each unit.

The alkali metal may be or include, for example, at least one of lithium, sodium, potassium, rubidium, or cesium.

In Chemical Formula 8, $l+m+n = 1$. As an example, $0.1 \leq (l + n) \leq 0.2$ and $0.8 \leq m \leq 0.9$, for example, $0.05 \leq l \leq 0.15$ and $0.01 \leq n \leq 0.1$and $0.8 \leq m \leq 0.9$.

As an example, in Chemical Formula 8, $L^2$ may be a substituted or unsubstituted C1 to C10 alkylene group, and b may be equal to 1.

In the (meth)acryl-based binder, the structural unit substituted with an alkali metal ($M^+$) may be present in an amount ranging from 50 mol% to 100 mol%, for example, from 60 mol% to 90 mol% or from 70 mol% to 90 mol% with respect to 100 mol% of the total amount of (meth)acrylamido sulfonic acid structural unit. When any of the above ranges are satisfied, the (meth)acryl-based binder and the separator including the (meth)acryl-based binder may exhibit desired or improved bonding strength, heat resistance, and oxidation resistance.

The (meth)acryl-based binder may further include other units in addition to the above-described units. For example, the (meth)acryl-based binder may further include at least one of a unit derived from an alkyl (meth)acrylate, a unit derived from a dienebased binder, a unit derived from a styrene-based binder, an ester group-containing unit, a carbonate group-containing unit, or a combination thereof.

The (meth)acryl-based binder may be in various forms, such as an alternating polymer in which the units are alternately distributed, a random polymer in which the units are randomly distributed, or a graft polymer in which some structural units are grafted.

A weight average molecular weight of the (meth)acryl-based binder may range from 350,000 g/mol to 970,000 g/mol, for example, from 450,000 g/mol to 970,000 g/mol, or from 450,000 g/mol to 700,000 g/mol. When the weight average molecular weight of the (meth)acryl-based binder satisfies any of the above ranges, the (meth)acryl-based binder and the separator including the (meth)acryl-based binder may exhibit desired or improved bonding strength, heat resistance, and air permeability. The weight average molecular weight may be a polystyrene-converted average molecular weight measured using gel permeation chromatography.

The (meth)acryl-based binder may be prepared by various known methods such as, e.g., emulsion polymerization, suspension polymerization, bulk polymerization, or solution polymerization.

The (meth)acryl-based binder may be prepared by, e.g., a solution polymerization method.

According to one example embodiment, the (meth)acryl-based binder may be contained in the coating layer of the separator in the form of a film.

The cross-linking agent includes an aziridine-based cross-linking agent. The aziridine-based cross-linking agent may be configured to crosslink the (meth)acryl-based binder and also to allow the separator to readily satisfy the above dry

shrinkage ratio and shrinkage ratio ranges in the electrolyte. According to one example embodiment, the aziridine-based cross-linking agent may be cross-linked by reacting with an amide group in the binder.

The aziridine-based cross-linking agent may be at least one of a bi-functional or higher aziridine-based cross-linking agent. Herein, "bi-functional or higher" indicates two or more aziridine groups present in a molecule. According to one example embodiment, the aziridine-based cross-linking agent may be a bi- or tri-functional aziridine-based cross-linking agent, for example, the tri-functional aziridine-based cross-linking agent.

For example, the aziridine-based cross-linking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

The aziridine-based cross-linking agent may be included in a desired amount with respect to the (meth)acryl-based binder. The aziridine-based cross-linking agent is contained in an amount ranging from 5 wt% to 50 wt% with respect to the content of the (meth)acryl-based binder. Within the above range, it is possible to achieve the crosslinking of the (meth)acryl-based binder and a reduction in the shrinkage ratio in the electrolyte. For example, the aziridine-based cross-linking agent may be included in an amount ranging from about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 wt%, 10 wt% to 40 wt%, for example, from 10 wt% to 30 wt%, from 10 to 20 wt%.

The aziridine-based cross-linking agent may be included in an amount or 95wt% or more, for example in a range of 95 wt% to 100 wt% of total cross-linking agent of the composition.

The filler has a particle diameter D100 of 0.7 μm or less. Within the above range, the separator may readily satisfy the dry shrinkage ratio and the shrinkage ratio in the electrolyte when the (meth)acryl-based binder is combined with the aziridine-based cross-linking agent. For example, the filler may have a particle diameter D100 of 0.05, 0.1, 0.15, 0.2, 0.25, 0.3, 0.35, 0.4, 0.45, 0.5, 0.55, 0.6, 0.65, 0.7 μm, 0.3 μm to 0.7 μm.

According to one example embodiment, the filler may have a particle diameter D50 of 0.4 μm or less, for example, about 0.05, 0.1, 0.15, 0.2, 0.25, 0.3, 0.35, 0.4 μm, 0.35 μm or less, 0.25 μm or less, or ranging from 0.1 μm to 0.35 μm. Within any of the above ranges, it is possible to increase the heat resistance of the separator.

The filler may be or include, for example, at least one of an inorganic filler, an organic filler, an organic-inorganic composite filler, or a combination thereof. The inorganic filler may be a ceramic material that can increase heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof. The organic filler may include at least one of an acrylic compound, an imide compound, an amide compound, or a combination thereof, but is not limited thereto. The organic filler may have a core-shell structure.

The filler may be spherical, plate-shaped, cubic, or amorphous. For example, the filler may be plate-shaped.

The filler may be included in a desired amount with respect to the (meth)acryl-based binder. According to one example embodiment, the (meth)acryl-based binder and the filler may be included in a mass ratio in a range of 1:10 to 1:50, for example, 1:10, 1:11, 1:12, 1:13, 1:14, 1:15, 1:16, 1:17, 1:18, 1:19, 1:20, 1:21, 1:22, 1:23, 1:24, 1:25, 1:26, 1:27, 1:28, 1:29, 1:30, 1:31, 1:32, 1:33, 1:34, 1:35, 1:36, 1:37, 1:38, 1:39, 1:40, 1:41, 1:42, 1:43, 1:44, 1:45, 1:46, 1:47, 1:48, 1:49, 1:50, from 1:15 to 1:40 or from 1:20 to 1:30. Within any of the above ranges, it is possible to increase heat resistance.

The filler may be contained in an amount ranging from 50 wt% to 99 wt%, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, or for example, from 95 wt% to 99 wt% of the total amount of the coating layer. When the filler is included within any of the above ranges, the separator may exhibit desired or improved heat resistance, durability, oxidation resistance, and stability.

The coating layer may have a thickness ranging from 0.01 μm to 20 μm, and within the above range, may have a thickness ranging from 1 μm to 10 μm, from 1 μm to 5 μm, or from 1 μm to 3 μm.

A ratio of the thickness of the coating layer to the thickness of the porous substrate may range from 0.05 to 0.5, for example, from 0.05 to 0.4 or from 0.1 to 0.4. Within any of the above ranges, the separator may exhibit desired or improved air permeability, heat resistance, bonding strength, and the like. Herein, the "thickness of the coating layer" indicates a thickness of one coating layer when the coating layer is formed on only one surface of the porous substrate, and a thickness of two coating layers when the coating layer is formed on both surfaces of the porous substrate.

## Porous substrate

The porous substrate may be a substrate having multiple pores and being commonly included in electrochemical devices. The porous substrate may be a polymer membrane formed of or including any one polymer such as or including at least one of a polyolefin such as polyethylene or polypropylene, polyester such as polyethylene terephthalate or

polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate containing a polyolefin, and the polyolefin-based substrate may have an desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment may exhibit desired or improved air permeability and have an air permeability value of, for example, less than 200 sec/100 cc, for example, 180 sec/100 cc or less, or 160 sec/100 cc or less. For example, the separator may have an air permeability value of less than 40 sec/100 cc·1 μm per unit thickness, for example, 30 sec/100 cc·1 μm or less or 25 sec/100 cc·1 μm or less. Herein, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using air permeability measuring equipment (EG01-55-1MR, Asahi Seiko Co., Ltd.).

The separator for a rechargeable lithium battery according to one example embodiment may be formed by applying a composition for forming a coating layer on one surface or both surfaces of a porous substrate, drying, and then curing the coating layer. The cross-linking and curing may be performed by heat treatment and performed by using typical methods known to those skilled in the art.

FIG. 1 is a cross-sectional view illustrating a separator for a rechargeable lithium battery according to one example embodiment. Referring to FIG. 1, the separator for a rechargeable lithium battery includes a porous substrate 1 and a coating layer 2 located on both surfaces of the porous substrate 1. The coating layer 2 includes a filler 3 and a cross-linked product 4 of a (meth)acryl-based binder and a cross-linking agent.

Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be positioned between the positive electrode and the negative electrode.

Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of from cobalt, manganese, nickel, and combinations thereof may be used.

The composite oxide may be a lithium transition metal composite oxide. Examples of the composite oxide may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following Chemical Formulas may be used. $Li_aA_{1-b}X_bO_{2-c}D_c$ ($0.90\leq a\leq 1.8$, $0\leq b\leq 0.5$, and $0\leq c\leq 0.05$); $Li_aMn_{2-b}X_bO_{4-c}D_c$ ($0.90\leq a\leq 1.8$, $0\leq b\leq 0.5$, and $0\leq c\leq 0.05$); $Li_aNi_{1-b-c}Co_bX_cO_{2-\alpha}D_\alpha$ ($0.90\leq a\leq 1.8$, $0\leq b\leq 0.5$, $0\leq c\leq 0.5$, and $0<\alpha<2$); $Li_aNi_{1-b-c}Mn_bX_cO_{2-\alpha}D_\alpha$ ($0.90\leq a\leq 1.8$, $0\leq b\leq 0.5$, $0\leq c\leq 0.5$, and $0<\alpha<2$); $Li_aNi_bCo_cL^1_dG_eO_2$ ($0.90\leq a\leq 1.8$, $0\leq b\leq 0.9$, $0\leq c\leq 0.5$, $0\leq d\leq 0.5$, and $0\leq e\leq 0.1$); $Li_aNiG_bO_2$ ($0.90\leq a\leq 1.8$ and $0.001\leq b\leq 0.1$); $Li_aCoG_bO_2$ ($0.90\leq a\leq 1.8$ and $0.001\leq b\leq 0.1$); $Li_aMn_{1-b}G_bO_2$ ($0.90\leq a\leq 1.8$ and $0.001\leq b\leq 0.1$); $Li_aMn_2G_bO_4$ ($0.90\leq a\leq 1.8$ and $0.001\leq b\leq 0.1$); $Li_aMn_{1-g}G_gPO_4$ ($0.90\leq a\leq 1.8$ and $0\leq g\leq 0.5$); $Li_{(3-f)}Fe_2(PO_4)_3$ ($0\leq f\leq 2$); or

$Li_aFePO_4$ (0.90≤a≤ 1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The highnickel-based positive electrode active material may be capable of realizing high capacity and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be configured to impart conductivity (e.g., electrical conductivity) to the electrode. Any material that does not cause chemical change (e.g., does not cause an undesirable chemical change in the rechargeable lithium battery) and that conducts electrons can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be included as the current collector, but is not limited thereto.

## Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which

primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The binder may be configured to attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be a polymer material that is capable of being fibrous. For example, the dry binder may be at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery) and that conducts electrons can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, etc. in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFBOP), lithium difluoro(oxalato)borate (LiDFOB) and lithium bis(oxalato) borate (LiBOB).

The rechargeable lithium battery may be classified into cylindrical, prismatic, pouch, or coin-type batteries, and the like depending on their shape.

FIGS. 2-5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2-5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, and may be, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to automobiles, mobile phones, and/or various types of electric devices, as non-limiting examples.

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Examples.

**Preparation Example 1**

In a 10 L four-necked flask provided with a stirrer, a thermometer, and a cooling tube, a process of adding distilled water (6361 g), acrylic acid (72.06 g, 1.0 mol), acrylamide (604.1 g, 8.5 mol), potassium persulfate (2.7 g, 0.01 mol), 2-acrylamido-2-methylpropanesulfonic acid (103.6 g, 0.5 mol), and a 5N aqueous lithium hydroxide solution (1.05 equivalents with respect to a total amount of 2-acrylamido-2-methylpropanesulfonic acid), then reducing an internal pressure to 10 mmHg using a diaphragm pump, and returning the internal pressure to a normal pressure using nitrogen was repeated three times.

The reaction was carried out for 12 hours while controlling the temperature of the reaction solution to be stable between 65 °C and 70 °C. After cooling to room temperature, the pH of the reaction solution was adjusted to 7 to 8 using a 25% aqueous ammonia solution.

In this way, poly(acrylic acid-co-acrylic acid lithium salt-co-acrylamide-co-2-acrylamido-2-methylpropane sulfonic acid lithium salt) was prepared. A molar ratio of acrylic acid + acrylic acid lithium salt, acrylamide, and 2-acrylamido-2-methylpropane sulfonic acid lithium salt was 10:85:5. A non-volatile component in 10 mL of the reaction solution (reaction product) was measured and the measurement result was 9.5 wt% (theoretical value: 10%).

**Example 1**

A dispersion was prepared by mixing the acryl-based binder (10 wt% in distilled water) prepared in Preparation Example 1 and boehmite (particle diameter D100: 0.5 μm, particle diameter D50: 0.2 μm, plate-shaped) as a filler at a mass ratio of acryl-based binder:filler=1 part by weight: 30 parts by weight based on solid content, adding the mixture to a water solvent, and then milling and dispersing the same at 25 °C for 30 minutes using a bead mill.

A composition for forming a coating layer was prepared by adding trimethylolpropane tris (2-methyl-1-aziridine propionate) (tri-functional aziridine-based cross-linking agent) as an aziridine-based cross-linking agent in an amount of 0.1 part by weight (content of 10 wt% of the acryl-based binder) based on solid content to the dispersion and adding water so that the total solid content became 20 wt%.

A separator for a rechargeable lithium battery was manufactured by coating both surfaces of a polyethylene film (thickness: 8 μm, SK Company, air permeability: 120 sec/100 cc, and puncture strength: 480 kgf) as a porous substrate

with the composition for forming a coating layer using a die coating method and then drying and aging the same in an oven at 85 °C for 16 hours.

**Examples 2 to** 7

A separator for a rechargeable lithium battery was manufactured in the same manner as in Example 1, with a difference that in Example 1, as shown in Table 1 below, boehmite was used as a filler, but the D50 and D 100 was changed, the mass ratio of the (meth)acryl-based binder and filler was changed, and the content of the aziridine-based cross-linking agent was changed.

**Comparative Examples 1 to 4**

A separator for a rechargeable lithium battery was manufactured in the same manner as in Example 1, with a difference that in Example 1, as shown in Table 1 below, the D50 and D100 of the filler, the type of the cross-linking agent, the content of the cross-linking agent, the mass ratio of the (meth)acryl-based binder and the filler, etc. were changed. PVA is a homopolymer of polyvinyl alcohol.

**Dry shrinkage ratio (units: %)**

Samples were manufactured by cutting the separators for a rechargeable lithium battery of Examples and Comparative Examples to a size of 8 cm × 8 cm. A shrinkage ratio in each of a mechanical direction (MD) and a transverse direction (TD) was calculated by drawing a square with a size of 5 cm×5 cm on surfaces on the samples, then putting the same between pieces of paper or alumina powder, leaving the same in an oven at 150 °C for 1 hour, taking the sample out, and then measuring the side dimensions MD (machine direction) and TD (transverse direction) of the drawn square. The shrinkage ratio was calculated according to Equation 1 below.

Equation 1:

$$\text{Shrinkage ratio} = (L0- L1) / L0 \times 100$$

In Equation 1 above, L0 denotes an initial length of the separator, and L1 denotes a length of the separator after being left at 150 °C for 1 hour.

**Shrinkage ratio in electrolyte (units: %)**

Samples were manufactured by cutting the separators for a rechargeable lithium battery of Examples and Comparative Examples to a size of 5 cm × 5 cm.

A positive electrode slurry was prepared by mixing 97 wt% LiCoNiAl as a positive electrode active material, 1.5 wt% carbon nanotubes, and 1.5 wt% polyvinyl fluoride as a conductive material and adding water thereto.

A positive electrode was manufactured by applying the prepared positive electrode slurry to aluminum foil and drying and rolling the same.

A negative electrode active material slurry was prepared by mixing 97.4 wt% a negative electrode active material, 1.0 wt% carboxymethyl cellulose, 1.5 wt% styrene-butadiene-based rubber, and 0.1 wt% carbon nanotubes as a conductive agent. Artificial graphite was used as the negative electrode active material. A negative electrode was manufactured by applying the prepared negative electrode slurry to copper foil and drying and rolling the same.

One sample was located between the positive electrode and the negative electrode to form three sets of positive electrode-sample-negative electrode laminates, which were then put in a pouch. 2 g of an electrolyte (ethylene carbonate, ethyl methyl carbonate, and dimethyl carbonate (a volume ratio of 30:50:20) in which 1.5M $LiPF_6$ was dissolved) was injected to completely saturate the laminate with the electrolyte, which was sealed and left at 25 °C for 12 hours. Then, a shrinkage ratio in each of the mechanical direction (MD) and the transverse direction (TD) was calculated by leaving the laminate in the oven at 150 °C for 1 hour, then taking the sample out, and measuring the side dimensions of the drawn square. The shrinkage ratio was calculated according to Equation 1.

**Presence or absence of cross-linking**

Samples were manufactured by cutting the separators for a rechargeable lithium battery of Examples and Comparative Examples to a size of 8 cm × 8 cm. When the sample was fully immersed in deionized water at 25 °C and left

for 25 hours, whether the filler was detached from the coating layer was visually checked. When the filler is not detached, it indicates that the coating layer composition is cross-linked, and when the filler is detached, it indicates that the coating layer composition is not cross-linked.

Table 1:

| | Filler | | Binder: filler | Binder | Crosslinking agent | Crosslinking agent Content (wt%) | Presence or absence of crosslinking | DRY shrinkage ratio | | Shrinkage ratio in electrolyte | |
|---|---|---|---|---|---|---|---|---|---|---|---|
| | D50 | D100 | | | | | | MD | TD | MD | TD |
| Example 1 | 0.2 | 0.5 | 1:30 | Preparation Example 1 | Aziridine-based | 10 | Cross-linked | 2 | 2 | 12 | 15 |
| Example 2 | 0.2 | 0.5 | 1:25 | Preparation Example 1 | Aziridine-based | 10 | Cross-linked | 1.5 | 2 | 11 | 13 |
| Example 3 | 0.2 | 0.5 | 1:20 | Preparation Example 1 | Aziridine-based | 10 | Cross-linked | 1.5 | 1.5 | 3 | 4 |
| Example 4 | 0.2 | 0.5 | 1:25 | Preparation Example 1 | Aziridine-based | 20 | Cross-linked | 1.5 | 2 | 13 | 12 |
| Example 5 | 0.2 | 0.5 | 1:25 | Preparation Example 1 | Aziridine-based | 30 | Cross-linked | 2 | 1.5 | 7 | 8 |
| Example 6 | 0.2 | 0.5 | 1:25 | Preparation Example 1 | Aziridine-based | 40 | Cross-linked | 2 | 2 | 6 | 9 |
| Example 7 | 0.3 | 0.7 | 1:20 | Preparation Example 1 | Aziridine-based | 10 | Cross-linked | 1.5 | 2 | 12 | 13 |
| Comparative Example 1 | 0.2 | 0.5 | 1:20 | Preparation Example 1 | - | - | Not cross-linked | 2 | 2 | 43 | 47 |
| Comparative Example 2 | 0.3 | 1.3 | 1:20 | Preparation Example 1 | Aziridine-based | 10 | Cross-linked | 3 | 2 | 52 | 58 |
| Comparative Example 3 | 0.2 | 0.5 | 1:20 | PVA | Aziridine-based | 10 | Cross-linked | 10 | 15 | 51 | 55 |
| Comparative Example 4 | 0.2 | 0.5 | 1:20 | Preparation Example 1 | Aziridine-based | 60 | Cross-linked | 20 | 25 | 50 | 50 |

As shown in Table 1, the separators of Examples 1-7 have a significantly low dry shrinkage ratio and shrinkage ratio in the electrolyte, thereby increasing the safety of the battery.

Accordingly, a separator for a rechargeable lithium battery according to an example embodiment can have a significantly low dry shrinkage ratio and shrinkage ratio in an electrolyte, thereby increasing the stability of the battery.

## Claims

1. A separator (30) for a rechargeable lithium battery (100), the separator (30) comprising:

   a porous substrate (1); and
   a coating layer (2) located on at least one surface of the porous substrate (1),
   wherein the coating layer (2) includes a cross-linked product (4) of a binder and a cross-linking agent, and a filler (3),
   the binder includes a (meth)acryl-based binder including a first structural unit derived from (meth)acrylamide, and a second structural unit including at least one of a structural unit derived from (meth)acrylic acid, (meth)acrylate, or a salt thereof, and a structural unit derived from (meth)acrylamido sulfonic acid or a salt thereof,
   the cross-linking agent includes an aziridine-based cross-linking agent,
   the aziridine-based cross-linking agent is contained in an amount ranging from 5 wt% to 50 wt% with respect to the content of the (meth)acryl-based binder, and
   the filler (3) has a particle diameter D100 of 0.7 μm or less measured by a laser diffraction method.

2. The separator (30) of claim 1, wherein the aziridine-based cross-linking agent comprises a tri-functional aziridine-based cross-linking agent.

3. The separator (30) of claim 2, wherein the aziridine-based cross-linking agent comprises at least one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

4. The separator (30) of any one of the preceding claims, wherein the (meth)acryl-based binder and the filler (3) are included in a mass ratio of 1:10 to 1:50.

5. The separator (30) of any one of the preceding claims, wherein the filler (3) has a particle diameter D50 of 0.4 μm or less measured by a laser diffraction method.

6. The separator (30) of any one of the preceding claims, wherein the filler (3) comprises a plate-shaped inorganic filler.

7. The separator (30) of any one of the preceding claims, wherein the first structural unit derived from (meth)acrylamide is represented by Chemical Formula 1 below:

   Chemical Formula 1:

   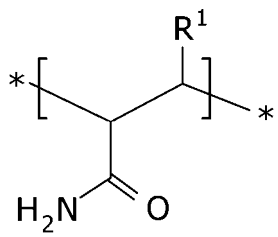

   in Chemical Formula 1, $R^1$ comprises hydrogen or a methyl group; and/or
   the structural unit derived from (meth)acrylic acid, (meth)acrylate, or a salt thereof is represented by any one or more of Chemical Formulas 2, 3, 4 below:

Chemical Formula 2:

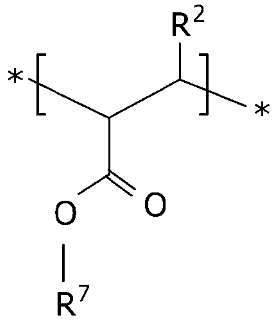

Chemical Formula 3:

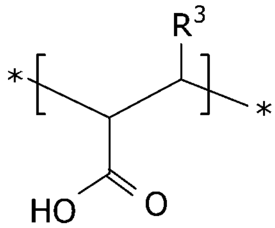

Chemical Formula 4:

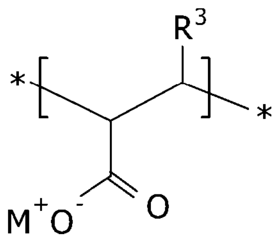

in Chemical Formulas 2, 3, and 4, $R^2$ and $R^3$ each independently comprises hydrogen or a methyl group, $R^7$ comprises a substituted or unsubstituted C1 to C20 alkyl group, and M comprises an alkali metal; and/or the structural unit derived from (meth)acrylamido sulfonic acid or a salt thereof is represented by any one or more of Chemical Formulas 5, 6, 7 below:

Chemical Formula 5:

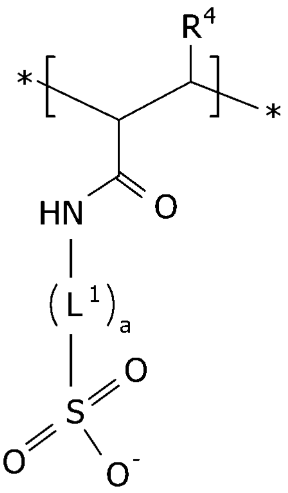

Chemical Formula 6:

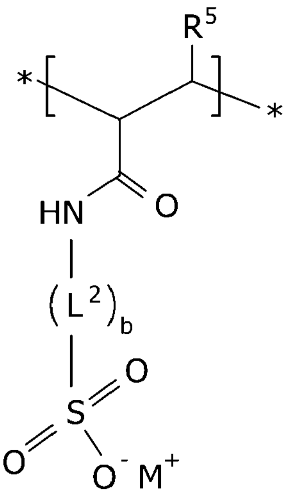

Chemical Formula 7:

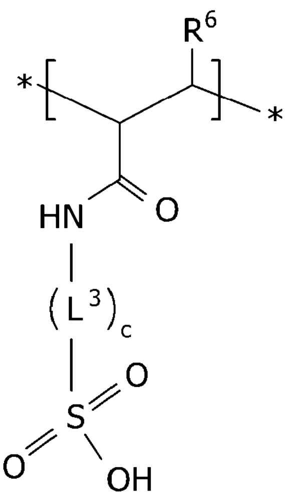

in Chemical Formulas 5 to 7, $R^4$, $R^5$, and $R^6$ each independently comprises hydrogen or a methyl group, $L^1$, $L^2$, and $L^3$ each independently comprises a substituted or unsubstituted C1 to C10 alkylene group, a substituted or unsubstituted C3 to C20 cycloalkylene group, a substituted or unsubstituted C6 to C20 arylene group, or a

substituted or unsubstituted C3 to C20 heterocyclic group, a, b and c are each independently an integer in a range of 0 to 2, and M comprises an alkali metal,
wherein "substitution" means that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**8.** The separator (30) of claim 7, wherein the first structural unit derived from (meth)acrylamide is included in an amount ranging from 80 mol% to 90 mol%, the structural unit derived from (meth)acrylic acid, (meth)acrylate, or a salt thereof is included in an amount ranging from 5 mol% to 15 mol%, and the structural unit derived from (meth)acrylamido sulfonic acid or a salt thereof is included in an amount ranging from 1 mol% to 10 mol% with respect to 100 mol% of the (meth) acryl-based binder.

**9.** The separator (30) of claim 7 or 8, wherein the (meth)acryl-based binder is represented by Chemical Formula 8 below:

Chemical Formula 8:

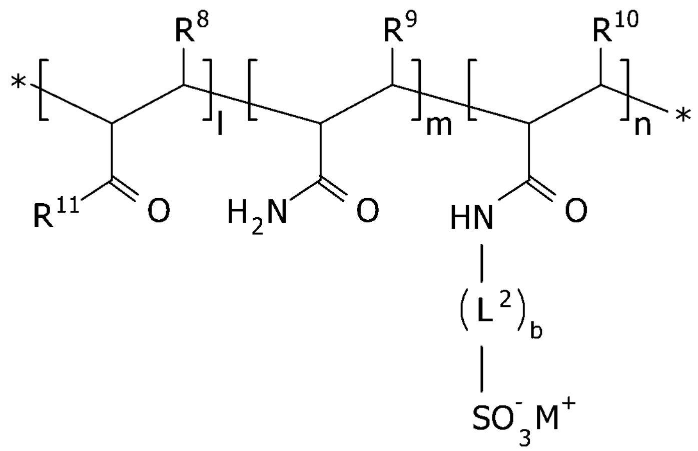

in Chemical Formula 8, $R^8$ to $R^{10}$ each independently comprises hydrogen or a methyl group,
$R^{11}$ comprises $OR^{12}$ or $O-M^+$, $R^{12}$ comprises hydrogen or a C1 to C6 alkyl group, M comprises an alkali metal,
$L^2$ comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
b is an integer in a range of 0 to 2,
M comprises an alkali metal, and
l, m, and n refer to a molar ratio of each unit.

**10.** The separator (30) of claim 1, wherein the coating layer (2) has a thickness ranging from 1 μm to 3 μm.

**11.** A rechargeable lithium battery (100) comprising:

the separator (30) of claim 1;
a positive electrode (10); and

a negative electrode (20).

FIG 1.

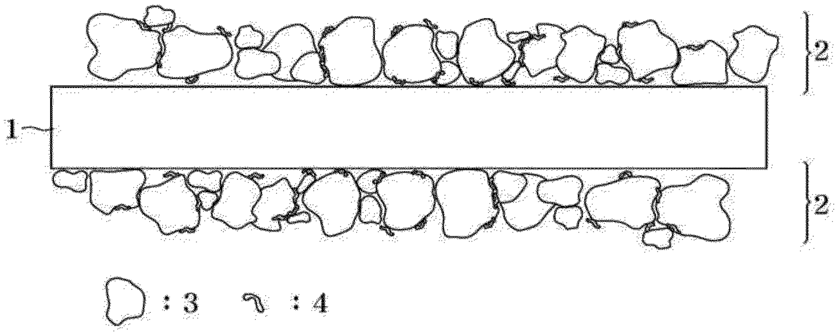


FIG 2.

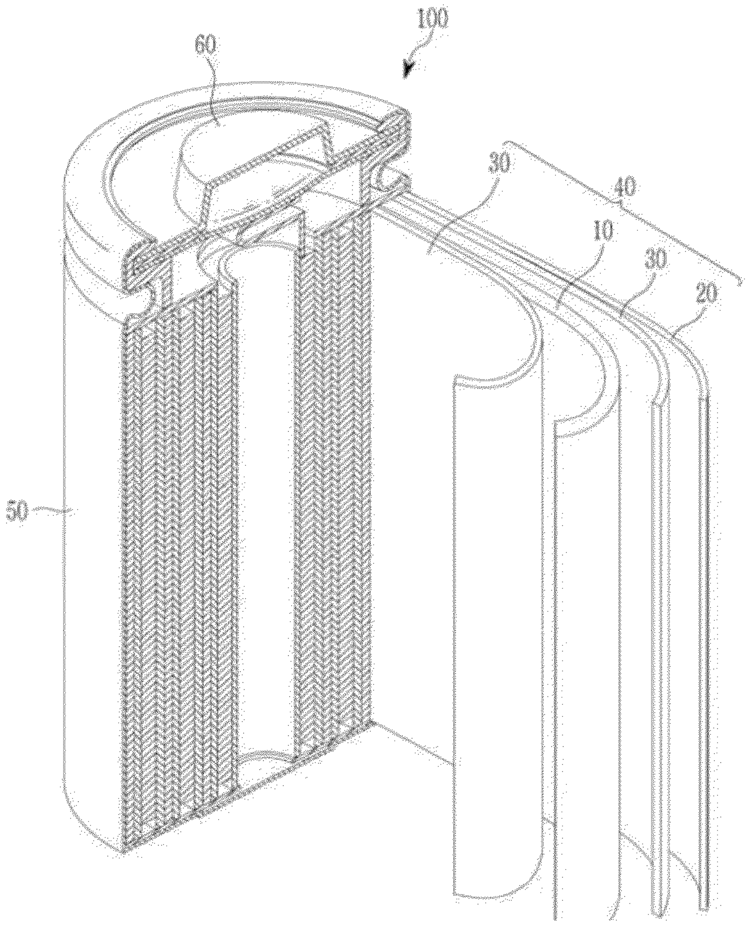

**FIG 3.**

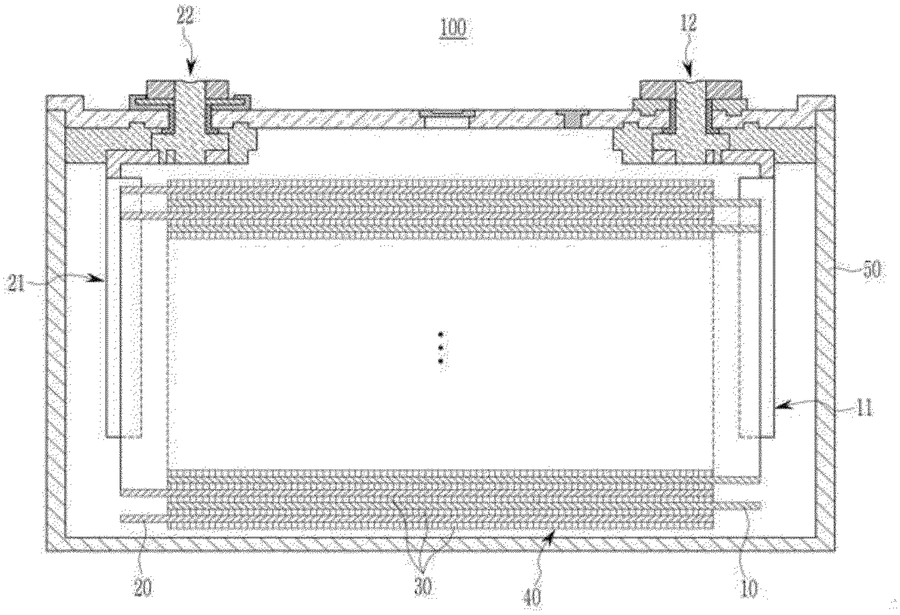


**FIG 4.**

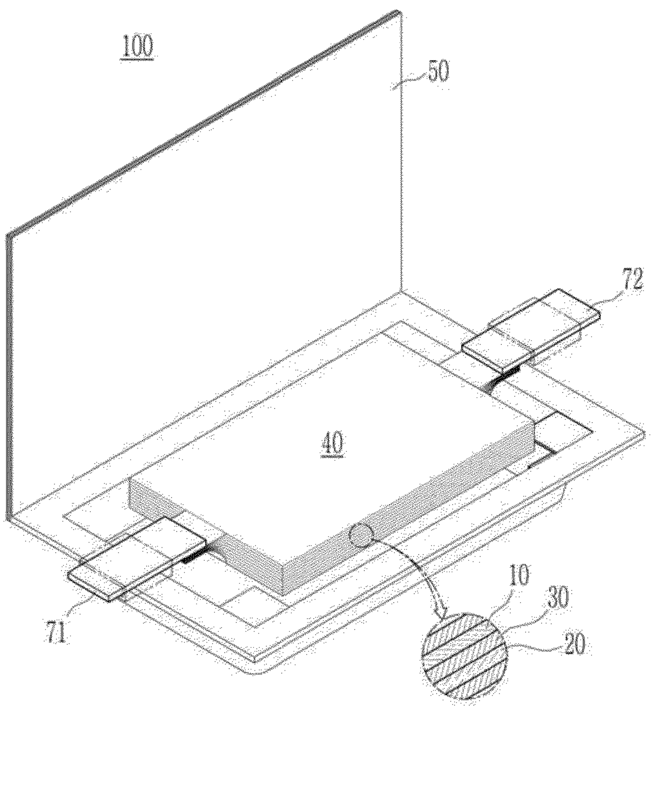

**FIG 5.**

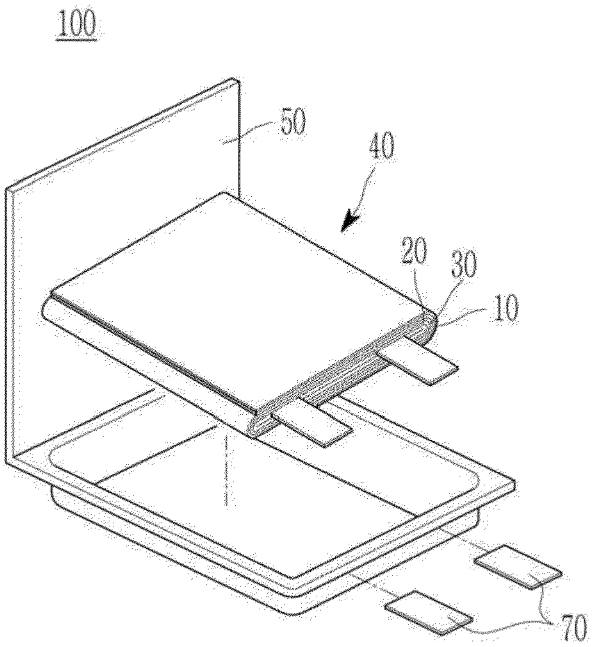

Europäisches Patentamt
European Patent Office
Office européen des brevets

# EUROPEAN SEARCH REPORT

Application Number
EP 24 21 2630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2013 0139200 A (LG CHEMICAL LTD [KR]) 20 December 2013 (2013-12-20) * paragraphs [0004], [0011] - [0013], [0020], [0021], [0031]; claim 15 * | 1-11 | INV. H01M50/446 H01M50/403 H01M50/42 H01M50/489 H01M50/449 H01M10/052 H01M50/417 |
| X | CN 107 895 766 A (CHINA AVIATION LITHIUM BATTERY LUOYANG CO LTD) 10 April 2018 (2018-04-10) * the whole document * | 1-11 | |
| A | KR 2022 0155022 A (SAMSUNG SDI CO LTD [KR]) 22 November 2022 (2022-11-22) * paragraphs [0047] - [0073]; claims 1-14; example 1 * | 1-11 | |

TECHNICAL FIELDS SEARCHED (IPC)

H01M

The present search report has been drawn up for all claims

1

| Place of search | Date of completion of the search | Examiner |
|---|---|---|
| Munich | 12 March 2025 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 2630

This annex lists the patent family members relating to the patent documents cited in the above-mentioned European search report. The members are as contained in the European Patent Office EDP file on
The European Patent Office is in no way liable for these particulars which are merely given for the purpose of information.

12-03-2025

| Patent document cited in search report | Publication date | Patent family member(s) | Publication date |
|---|---|---|---|
| KR 20130139200 A | 20-12-2013 | NONE | |
| CN 107895766 A | 10-04-2018 | NONE | |
| KR 20220155022 A | 22-11-2022 | KR 20220155022 A | 22-11-2022 |
| | | US 2024145866 A1 | 02-05-2024 |
| | | WO 2022240227 A1 | 17-11-2022 |

EPO FORM P0459

For more details about this annex : see Official Journal of the European Patent Office, No. 12/82